# EUROPÄISCHE PATENTSCHRIFT

(11) **EP 3 347 878 B1**
(45) Veröffentlichungstag und Bekanntmachung des Hinweises auf die Patenterteilung: **02.03.2022**
(21) Anmeldenummer: 16767194.0
(22) Anmeldetag: 09.09.2016
(51) Int. Cl.: G06T 19/00

(54) **VERFAHREN UND VORRICHTUNG ZUM ÜBERLAGERN EINES ABBILDS EINER REALEN SZENERIE MIT EINEM VIRTUELLEN BILD UND MOBILES GERÄT**
METHOD AND APPARATUS FOR SUPERIMPOSING A VIRTUAL IMAGE ONTO AN IMAGE OF A REAL SCENE, AND MOBILE DEVICE
PROCÉDÉ ET DISPOSITIF POUR SUPERPOSER UNE IMAGE VIRTUELLE À UNE REPRÉSENTATION D'UN CADRE RÉEL, ET APPAREIL MOBILE

(30) Priorität: 11.09.2015 DE 102015115394
(43) Veröffentlichungstag der Anmeldung: 18.07.2018
(73) Patentinhaber: 3DQR GmbH, 39104 Magdeburg (DE)
(72) Erfinder: ANDERSON, Daniel, 39106 Magdeburg (DE)
(74) Vertreter: Aurigium Leischner & Luthe
(86) Internationale Anmeldenummer: PCT/EP2016/071328
(87) Internationale Veröffentlichungsnummer: WO 2017/042348

(56) Entgegenhaltungen:
- NOHYOUNG PARK ET AL: "Barcode-Assisted Planar Object Tracking Method for Mobile Augmented Reality", 2011 INTERNATIONAL SYMPOSIUM ON UBIQUITOUS VIRTUAL REALITY, Juli 2011 (2011-07), Seiten 40-43, XP055178099, DOI: 10.1109/ISUVR.2011.20 ISBN: 978-1-45-770356-0
- Hyoseok Yoon ET AL: "QR Code Data Representation for Mobile Augmented Reality", International AR Standards Meeting, 17. Februar 2011 (2011-02-17), XP055178102, Gefunden im Internet: URL:http://www.perey.com/ARStandards/GIST_ QRCode_for_AR.pdf [gefunden am 2015-03-20]
- TSOUKNIDAS NIKOLAOS ET AL: "QR-code calibration for mobile augmented reality applications", ACM SIGGRAPH 2010 POSTERS ON, SIGGRAPH '10, ACM PRESS, NEW YORK, NEW YORK, USA, 26. Juli 2010 (2010-07-26), Seite 1, XP058220767, DOI: 10.1145/1836845.1836999 ISBN: 978-1-4503-0393-4
- Mark Billinghurst ET AL: "A Survey of Augmented Reality", Foundations and Trends? in Human-Computer Interaction, vol. 8, no. 2-3, 1 January 2015 (2015-01-01), pages 73-272, XP055421092, ISSN: 1551-3955, DOI: 10.1561/1100000049
- KEVIN CANNONS: "A Review of Visual Tracking", TECHNICAL REPORT CSE-2008-07, YORK UNIVERSITY, DEPARTMENT OF COMPUTER SCIENCE AND ENGINEERING, CA, 16 September 2008 (2008-09-16), pages 1-242, XP007909480,
- GERHARD REITMAYR ET AL: "Simultaneous Localization and Mapping for Augmented Reality", UBIQUITOUS VIRTUAL REALITY (ISUVR), 2010 INTERNATIONAL SYMPOSIUM ON, IEEE, PISCATAWAY, NJ, USA, 7 July 2010 (2010-07-07), pages 5-8, XP031739392, ISBN: 978-1-4244-7702-9
- SERVANT F ET AL: "Visual planes-based simultaneous localization and model refinement for augmented reality", 19TH INTERNATIONAL CONFERENCE ON PATTERN RECOGNITION, 2008: ICPR 2008; 8 - 11 DEC. 2008, TAMPA, FLORIDA, USA, IEEE, PISCATAWAY, NJ, 8 December 2008 (2008-12-08), pages 1-4, XP031411906, ISBN: 978-1-4244-2174-9

## Beschreibung

Die Erfindung betrifft ein Verfahren und eine Vorrichtung zum Überlagern eines Abbilds einer realen Szenerie mit einem virtuellen Bild, wobei das Verfahren beispielsweise unter Verwendung eines mobilen Geräts ausgeführt werden kann, sowie ein mobiles Gerät wie beispielsweise ein Smartphone.

Das grundlegende Konzept der Augmented Reality (AR) existiert bereits seit einigen Jahrzehnten und bezeichnet die Überlagerung von Echtzeit-Abbildern der Realität (z.B. als Kamerabild) mit virtuellen Informationen.

Nohyoung Park et al.: "Barcode-Assisted Planar Object Tracking Method for Mobile Augmented Reality", 2011 International Symposium on Ubiquitous Virtual Reality, Juli 2011 (2011-07), Seiten 40-43; DOI: 10.11 09/ISUVR.2011.20; ISBN: 978-1-45-770356-0 offenbart ein Verfahren zum Verfolgen eines planaren Objekts in Abbildern einer realen Szenerie. Dabei werden zunächst mehrere Positions-Marker verwendet, um eine Stellung eines auf dem planaren Objekt platzierten QR-Codes zu ermitteln. Eine robuste Verfolgung von markanten Punkten einer durch den QR-Code definierten "Region of Interest" des planaren Objekts in aufeinanderfolgenden Abbildern wird mit Hilfe des optischen Flusses gewährleistet.

Hyoseok Yoon et al.: "QR Code Data Representation for Mobile Augmented Reality", International AR Standards Meeting, 17. Februar 2011 (2011-02-17)) befasst sich mit einem für das Gebiet der erweiterten Realität verwendbaren QR-Code.

Der Erfindung stellt sich die Aufgabe, ein verbessertes Verfahren und eine verbesserte Vorrichtung zum Überlagern eines Abbilds einer realen Szenerie mit einem virtuellen Bild sowie ein verbessertes mobiles Gerät zu schaffen, wobei eine "Augmented Reality" sowohl in der Nähe als auch in weiter Entfernung eines Markers (wie zum Beispiel eines QR-Codes) ermöglicht wird.

Diese Aufgabe wird durch ein Verfahren und eine Vorrichtung zum Überlagern eines Abbilds einer realen Szenerie mit einem virtuellen Bild sowie ein mobiles Gerät gemäß den Hauptansprüchen gelöst, wobei die Erfindung unter anderem die Merkmale umfasst, dass eine Veränderung der relativen Position zwischen dem mobilen Gerät und dem Marker der Erfindung zu einer Entfernung von bis zum fünftausendfachen der Seitenlänge des Markers führt, bei der das mobile Gerät den Marker nicht erkennt, wobei zumindest ein in dem mobilen Gerät befindliches Messgerät, zusätzlich zu der Bilderfassung der Erfindung, zur Messung der Veränderung der relativen Position genutzt wird.

Vorteilhafte Ausgestaltungen und Weiterbildungen der Erfindung ergeben sich aus den Unteransprüchen.

Der beschriebene Ansatz befasst sich speziell mit dem Bereich der optisch kongruent überlagernden Augmented Reality, bei der virtuelle Objekte in Position und Lage mit Ankerpunkten in der realen Szene verknüpft werden und stets perspektivisch korrekt so in die dreidimensionale Szene eingeblendet werden, als wären sie Teil der realen Umgebung. Dazu kann gemäß einer Ausführungsform jedes einzelne Bild eines Kamera-Streams mit Bildverarbeitungsverfahren analysiert und die entsprechend nötige dreidimensionale Position und Lage des virtuellen Objekts berechnet werden, um diesen Effekt zu erreichen.

Eine Auswahl eines zu überlagernden virtuellen Objekts, im Folgenden auch als virtuelles Bild bezeichnet, kann vorteilhaft unter Verwendung eines in der realen Szenerie vorhandenen Markers, beispielsweise eines QR-Codes, durchgeführt werden. Eine Positionierung des virtuellen Bilds innerhalb eines Abbilds der realen Szenerie wird vorteilhaft unter Verwendung zumindest eines ersten Objektabschnitts und eines zweiten Objektabschnitts, beispielsweise einer Kante oder einer Fläche, eines im Umfeld des Markers in der realen Szenerie angeordneten Objekts durchgeführt. Abbilder der Objektabschnitte werden als Ankerpunkte für das virtuelle Objekt verwendet. Durch die Verwendung des Markers kann mit geringem Aufwand sichergestellt werden, dass das zur realen Szenerie passende virtuelle Bild ausgewählt wird. Durch die Verwendung der Objektabschnitte kann sichergestellt werden, dass das virtuelle Bild auch bei widrigen Bedingungen, beispielsweise schlechten Lichtverhältnissen, sehr genau positioniert werden kann. Diese Positionierung ist auch dann möglich, wenn in späteren Abbildern der realen Szenerie der Marker nicht mehr oder nur teilweise abgebildet wird.

Das Verfahren zum Überlagern eines Abbilds einer realen Szenerie mit einem virtuellen Bild umfasst die folgenden Schritte:
Einlesen von Bilddaten, wobei die Bilddaten ein von einer Umfelderfassungseinrichtung eines mobilen Geräts erfasstes Abbild der realen Szenerie repräsentieren;
Bestimmen von Markerdaten aus den Bilddaten, wobei die Markerdaten ein Abbild und eine Positionierung eines in der realen Szenerie angeordneten Markers repräsentieren;
Einlesen von virtuellen Bilddaten, wobei die virtuellen Bilddaten aus einer Mehrzahl virtueller Bilddaten unter Verwendung der Markerdaten ausgewählte Bilddaten repräsentieren, wobei die virtuellen Bilddaten eine Darstellungsanweisung zum Darstellen des virtuellen Bilds und eine Positionierungsanweisung zum Positionieren des virtuellen Bilds umfassen;
Bestimmen von Objektdaten aus den Bilddaten, wobei die Objektdaten ein Abbild und eine Positionierung eines Objektabschnitts eines im Umfeld des Markers in der realen Szenerie angeordneten Objekts repräsentieren, und wobei die Objektdaten ein zweites Abbild und eine zweite Positionierung eines zweiten Objektabschnitts eines weiteren im Umfeld des Markers in der realen Szenerie angeordneten Objekts repräsentieren;
Ermitteln einer Positionierungsvorschrift zum Positionieren des virtuellen Bilds in Bezug zu dem Abbild des Objektabschnitts und dem zweiten Abbild des zweiten Objektabschnitts unter Verwendung der Markerdaten, der Objektdaten und der virtuellen Bilddaten.

Bei der realen Szenerie kann es sich beispielsweise um einen Bereich eines Umfelds des mobilen Geräts handeln, der im Erfassungsbereich der Umfelderfassungseinrichtung liegt.

Bei der Umfelderfassungseinrichtung kann es sich um eine optische Bilderfassungseinrichtung, beispielsweise eine Kamera handeln. Das Abbild kann ein unter Verwendung der Umfelderfassungseinrichtung erfasstes Bild der realen Szenerie darstellen, das beispielsweise unter Verwendung einer Anzeigeeinrichtung des mobilen Geräts angezeigt werden kann. Unter dem virtuellen Bild kann eine beliebige Darstellung, beispielsweise eine Grafik, ein Symbol oder eine Schrift verstanden werden, die in das Abbild der realen Szenerie eingefügt werden kann. Das virtuelle Bild kann ein dreidimensionales oder auch ein zweidimensionales Bild oder einen Punkt darstellen. Eine Überlagerung des Abbilds der realen Szenerie mit dem virtuellen Bild kann das Abbild der realen Szenerie umfassen, in dem zumindest ein Bereich vollständig oder beispielsweise halb-transparent von dem virtuellen Bild verdeckt ist. Unter einem Marker kann ein künstlich in der Szenerie platzierter Marker, beispielsweise ein geometrischer Marker, in Form eines Codes oder Piktogramms verstanden werden. Der Marker kann als ein künstlicher Marker in Form eines eindimensionalen oder zweidimensionalen Codes ausgeführt sein. Beispielsweise kann der Marker als eine Matrix mit hellen und dunklen Flächen ausgeführt sein. Der Marker kann eine optoelektronisch lesbare Schrift repräsentieren. In dem Marker können Daten in Form eines Symbols abgebildet sein. Die Markerdaten können Informationen über das Abbild des Markers und die Positionierung des Abbilds des Markers innerhalb des Abbilds der realen Szenerie umfassen. In den weiteren Schritt des Verfahrens können die Markerdaten jeweils vollständig oder teilweise und gegebenenfalls auch in einer weiterverarbeiteten Form verwendet werden. Die Positionierungsanweisung zum Positionieren des virtuellen Bilds kann geeignet sein, um das virtuelle Bild in Bezug zu dem Abbild des Markers in dem Abbild der realen Szenerie zu positionieren. Der Objektabschnitt kann ein Teil, Abschnitt oder ein Bereich, beispielsweise eine Kante oder Fläche, eines realen Objekts sein. Ein Objekt kann ein beliebiger Gegenstand, beispielsweise ein Gebäude, ein Einrichtungsgegenstand, ein Fahrzeug oder ein Stück Papier sein. Der Objektabschnitt kann beispielsweise eine Außenkante oder eine Kante zwischen zueinander abgewinkelten Flächen eines solchen Gegenstands sein. Die Objektdaten umfassen Informationen über das Abbild des Objektabschnitts und einer Positionierung des Abbilds innerhalb des Abbilds der realen Szenerie. In den weiteren Schritt des Verfahrens können die Objektdaten jeweils vollständig oder teilweise und gegebenenfalls auch in einer weiterverarbeiteten Form verwendet werden. Die Positionierungsvorschrift ist geeignet, um das virtuelle Bild in Bezug zu dem Abbild des Objektabschnitts und dem zweiten Abbild des zweiten Objektabschnitts in dem Abbild der realen Szenerie oder einem weiteren Abbild der realen Szenerie zu positionieren. Die Positionierungsvorschrift wird unter Verwendung der Objektdaten und der virtuellen Bilddaten ermittelt. Die Positionierungsvorschrift kann somit unter Verwendung der Positionierung des Abbilds des Markers, der Positionierung des Abbilds des Objektabschnitts und der Positionierungsanweisung ermittelt werden.

Gemäß einer Ausführungsform kann im Schritt des Ermittelns die Positionierungsvorschrift unter Verwendung der Markerdaten oder zumindest eines Teils der Markerdaten ermittelt werden.

Eine kontinuierliche Iteration der Schritte des Einlesens, des Bestimmens und des Ermittelns wird in kurzen Zeitabständen, mehrmals pro Sekunde, durchgeführt. Beispielsweise können die Schritte zwischen zehnmal und zweihundertmal pro Sekunde (also jede Zehntelsekunde beziehungsweise jede 5/1000 Sekunden) ausgeführt werden.

Der beschriebene Ansatz ermöglicht die Positionierung des virtuellen Objektes in einer perspektivisch richtigen Darstellung aus einer weiten Entfernung und relativ uneingeschränkten Position des mobilen Gerätes. Vorteilhafterweise ist es dazu nicht erforderlich, dass das mobile Gerät den Marker erkennt und das zugehörige virtuelle Objekt in einer fixen Position zu diesem Marker positioniert. Unter einer weiten Entfernung wird eine Entfernung bis zu dem Fünftausendfachen der Seitenlänge des Markers, beispielsweise eine Entfernung zwischen dem zehnfachen und dem Fünftausendfachen der Seitenlänge des Markers, beispielsweise des QR-Codes, verstanden. Bei einer Kantenlänge von 2cm des Markers entspricht dies einer Entfernung von bis zu 100 m (5000x Kantenlänge). Unter der relativ uneingeschränkten Position können Abweichungen zwischen 0,1° bis 180° in allen drei Achsen verstanden werden. Damit sollen 360° rundum abgedeckt sein. Es ist auch nicht erforderlich, dass sich der Marker ständig im Blickfeld (Umfeld-Erfassungseinrichtung) des mobilen Gerätes befindet.

Der beschriebene Ansatz nutzt zumindest eines der in dem mobilen Gerät befindlichen Messgeräte - zusätzlich zu der Bilderfassung - zur Messung der Veränderung der relativen Position - nach der Erfassung des Markers - zu der bei der Erst-Erfassung des Markers fixierten Position. Zusätzlich werden Daten eines realen Objektes aus den realen Bilddaten als Objektabschnitt, auch als "Sekundär-Marker" bezeichnet, verwendet, sodass sich der eigentliche Marker nicht mehr in dem Erfassungsbereich der Umfeld-Erfassungseinrichtung befinden muss.

Als entsprechende Messgeräte, auch als Erkennungseinrichtungen oder Messsensoren bezeichnet, können im mobilen Gerät, beispielsweise im Smartphone oder Tablet, die im Folgenden genannten Einrichtungen - nach der einmaligen Erfassung des Markers - genutzt werden, um eine Abweichung von der Erst-Position zu bestimmen. Dabei können einzelne Messsensoren oder auch beliebige Kombinationen gewählt werden.

Beschleunigungssensor: einerseits zur Messung von translatorischen Bewegungen des mobilen Geräts, andererseits zur Bestimmung der Richtung der Erd-Gravitation relativ zum Gerät und somit Ausrichtung/Drehung des Geräts.

Rotationssensor: zur Messung von rotatorischen Bewegungen des mobilen Geräts.

Magnetometer: zur Messung des Erdmagnetfelds und somit horizontalen Drehung des mobilen Geräts.

GPS-Empfänger: optional bei sehr großen Abständen und zur groben Positionierung mit einer Genauigkeit von ± 2 Metern.

Dabei ist die Nutzung von Beschleunigungssensor und Rotationssensor als Ergänzung zur Bilderfassungseinrichtung bevorzugt.

Die Bilderfassungseinrichtung kann auf sichtbares Licht (400-800nm) beschränkt sein, kann aber auch andere Spektralbereiche zusätzlich oder ausschließlich erfassen (z.B. zusätzlich oder auch ausschließlich IR- oder UV-Licht).

Messwerte eines entsprechenden Messgerätes werden verwendet, um eine durch eine Bewegung des mobilen Geräts hervorgerufene Verschiebung des Objektabschnitts oder des Abbilds des Objektabschnitts zu bestimmen. Gemäß einer Ausführungsform wird ein die Verschiebung repräsentierender Wert verwendet, um im Schritt des Ermittelns die Positionierungsvorschrift zum Positionieren des virtuellen Bilds in Bezug zu dem Abbild des Objektabschnitts zu ermitteln.

Somit kann die Positionierungsvorschrift beispielsweise unter Verwendung eines Messwertes eines Messgerätes oder mehrerer Messgeräte, beispielsweise eines Beschleunigungssensors, eines Rotationssensors, eines Magnetometers oder eines GPS-Empfängers, des mobilen Geräts ermittelt werden.

Damit ist weiter ein technisches Problem gelöst, das dann besteht, wenn sich das virtuelle Objekt in der Realität bewegen soll. Wenn bei der Verfolgung dieser Bewegung der Marker aus dem Blickfeld der Umfeld-Erfassungseinrichtung verschwindet, bricht die virtuelle Darstellung nicht zusammen. Damit können nun auch Bildfolgen in einem weiten Umgebungsbereich dargestellt werden.

Gemäß einer Ausführungsform umfasst das Verfahren einen Schritt des Bereitstellens zumindest eines Teils der Markerdaten an eine Schnittstelle zu einer externen Einrichtung. In diesem Fall können im Schritt des Einlesens von virtuellen Bilddaten die virtuellen Bilddaten über die Schnittstelle zu der externen Einrichtung, beispielsweise einem Server, eingelesen werden. Bei der genannten Schnittstelle kann es sich beispielsweise um eine Funkschnittstelle handeln. Vorteilhafterweise kann die Auswahl der virtuellen Bilddaten unter Verwendung der externen Einrichtung durchgeführt werden. Dadurch kann Speicherplatz auf dem mobilen Gerät eingespart werden und es kann sichergestellt werden, dass stets aktuelle virtuelle Bilddaten zur Verfügung stehen.

Das Verfahren kann einen Schritt des Auswählens der virtuellen Bilddaten aus der Mehrzahl virtueller Bilddaten unter Verwendung der Markerdaten umfassen. Der Schritt des Auswählens kann unter Verwendung einer externen Einrichtung oder einer Einrichtung des mobilen Geräts erfolgen. Letzteres bietet den Vorteil, dass das Verfahren autark auf dem mobilen Gerät ausgeführt werden kann. Die virtuellen Bilddaten können ausgewählt werden, indem beispielsweise das Abbild des Markers oder eine Identifikation des Markers mit der Mehrzahl von virtuellen Bildern zugeordneten Abbildern oder Identifikationen potenzieller Marker verglichen wird und dasjenige der virtuellen Bilder ausgewählt wird, bei dem sich eine Übereinstimmung ergibt. Auf diese Weise kann das passende virtuelle Bild mit hoher Sicherheit ausgewählt werden.

Dazu kann das Verfahren einen Schritt des Ermittelns einer Identifikation des Markers unter Verwendung der Markerdaten umfassen. Im Schritt des Auswählens können die virtuellen Bilddaten dann unter Verwendung der Identifikation ausgewählt werden. Unter einer Identifikation kann beispielsweise ein Code oder eine Zeichenfolge verstanden werden.

Beispielsweise kann der Marker einen maschinenlesbaren Code repräsentieren, der eine entsprechende Identifikation des Markers umfasst. In diesem Fall kann die Identifikation des Markers im Schritt des Bestimmens von Markerdaten als Teil der Markerdaten bestimmt werden. Unter Verwendung eines maschinenlesbaren Codes kann das Abbild des Markers sehr einfach ausgewertet werden.

Das Verfahren umfasst einen Schritt des Verwendens der Positionierungsvorschrift, um ein weiteres Abbild der realen Szenerie mit dem virtuellen Bild zu überlagern. Vorteilhafterweise kann die einmal bestimmte Positionierungsvorschrift verwendet werden, um das virtuelle Bild zeitlich aufeinanderfolgenden Abbildern der realen Szenerie zu überlagern.

Dazu umfasst der Schritt des Verwendens einen Schritt des Einlesens von weiteren Bilddaten, wobei die weiteren Bilddaten das von der Umfelderfassungseinrichtung des mobilen Geräts erfasste weitere Abbild der realen Szenerie repräsentieren, einen Schritt des Bestimmens einer Positionierung eines weiteren Abbilds des Objektabschnitts aus den weiteren Bilddaten, und einen Schritt des Erstellens überlagerter Bilddaten unter Verwendung der weiteren Bilddaten, des weiteren Abbilds des Objektabschnitts und der Positionierungsvorschrift, wobei die überlagerten Bilddaten eine Überlagerung des weiteren Abbilds der realen Szenerie mit dem virtuellen Bild repräsentieren. In dem Schritt des Bestimmens der Positionierung kann die Positionierung des weiteren Abbilds des Objektabschnitts innerhalb des weiteren Abbilds der realen Szenerie bestimmt werden. Somit können Abbilder des Objektabschnitts in zeitlich aufeinanderfolgenden Abbildern der realen Szenerie als Ankerpunkte für das virtuelle Bild eingesetzt werden. Im Schritt des Erstellens überlagerter Bilddaten kann das virtuelle Bild unter Verwendung der Darstellungsanweisung dargestellt werden.

Das Verfahren kann einen Schritt des Anzeigens einer Überlagerung des weiteren Abbilds der realen Szenerie mit dem virtuellen Bild unter Verwendung einer Anzeigeeinrichtung des mobilen Geräts umfassen. Beispielsweise können dazu die bereits genannten überlagerten Bilddaten an die Anzeigeeinrichtung bereitgestellt werden. Bei der Anzeigeeinrichtung kann es sich beispielsweise um einen Bildschirm oder ein Display handeln.

Das Verfahren kann einen Schritt des Erfassens der Bilddaten unter Verwendung der Umfelderfassungseinrichtung des mobilen Geräts umfassen. Beispielsweise können zeitlich fortlaufend Bilddaten erfasst werden, sodass zeitlich fortlaufend Abbilder der realen Szenerie bereitgestellt werden können. In die einzelnen Abbilder der realen Szenerie kann jeweils das virtuelle Bild eingeblendet werden.

Gemäß unterschiedlicher Ausführungsbeispiele können auch mehrere virtuelle Bilder zur Überlagerung verwendet werden. In diesem Fall können im Schritt des Einlesens mehrere virtuelle Bilddaten eingelesen werden oder die virtuellen Bilddaten können Darstellungsanweisungen und Positionierungsanweisungen zum Darstellen und Positionieren der Mehrzahl von virtuellen Bildern umfassen.

Ebenso können mehr als zwei Objektabschnitte eines oder unterschiedlicher Objekte verwendet werden. In diesem Fall können im Schritt des Bestimmens der Objektdaten mehrere Objektdaten bestimmt werden oder die Objektdaten können Abbilder und Positionierungen der Mehrzahl von Objektabschnitten repräsentieren. Im Schritt des Ermittelns der Positionierungsvorschrift können entsprechend mehrere Positionierungsvorschriften zum Positionieren des virtuellen Bilds in Bezug zu einzelnen Objektabschnitten ermittelt werden. Alternativ kann eine Positionierungsvorschrift ermittelt werden, die geeignet ist, um das virtuelle Bild in Bezug zu den Abbildern der Mehrzahl von Objektabschnitten zu positionieren. Die Verwendung einer Mehrzahl von Objektabschnitten bietet den Vorteil, dass das virtuelle Bild sehr genau positioniert werden kann und auch dann noch positioniert werden kann, wenn in einem Abbild der realen Szenerie nicht alle verwendeten Objektabschnitte abgebildet sind.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird. Ausführungsbeispiele der Erfindung sind in den Zeichnungen dargestellt und in der nachfolgenden Beschreibung näher erläutert. Es zeigt:
- Fig. 1: eine Übersichtsdarstellung eines Verfahrens zum Überlagern eines Abbilds einer realen Szenerie mit einem virtuellen Bild gemäß einem Ausführungsbeispiel;
- Fig. 2: eine Übersichtsdarstellung eines Verfahrens zum Erstellen einer Zuordnungsvorschrift gemäß einem Ausführungsbeispiel;
- Fig. 3: eine schematische Darstellung eines mobilen Geräts gemäß einem Ausführungsbeispiel; und
- Fig. 4: ein Ablaufdiagramm eines Verfahrens zum Überlagern eines Abbilds einer realen Szenerie mit einem virtuellen Bild gemäß einem Ausführungsbeispiel.

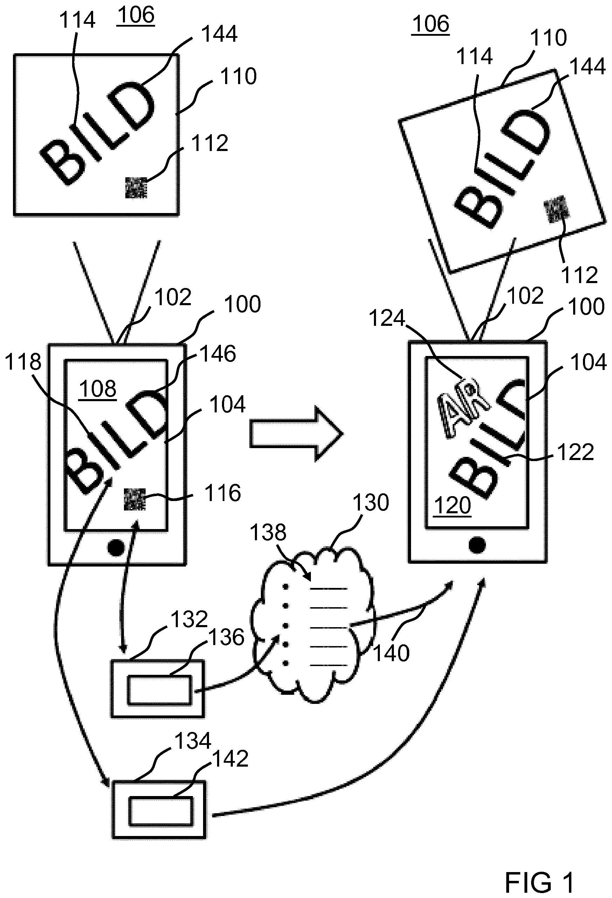

Fig. 1 zeigt eine Übersichtsdarstellung eines Verfahrens zum Überlagern eines Abbilds einer realen Szenerie mit einem virtuellen Bild gemäß einem Ausführungsbeispiel, das nicht alle Merkmale der Erfindung beinhaltet.

In der linken Hälfte von Fig. 1 ist ein mobiles Gerät 100, beispielsweise ein Smartphone, gezeigt, das eine Umfelderfassungseinrichtung 102 und eine Anzeigeeinrichtung 104 aufweist. Die Umfelderfassungseinrichtung 102 ist gemäß diesem Ausführungsbeispiel als eine Kamera ausgeführt, die ausgebildet ist, um eine sich in einem Erfassungsbereich der Umfelderfassungseinrichtung 102 befindliche reale Szenerie 106, auch reale Umgebung genannt, zu erfassen. Die Anzeigeeinrichtung 104 ist gemäß diesem Ausführungsbeispiel als ein Display ausgeführt, das ausgebildet ist, um einer Bedienperson des mobilen Geräts 104 ein von der Umfelderfassungseinrichtung 102 erfasstes Abbild 108 der realen Szenerie 106 anzuzeigen.

In der realen Szenerie 106 ist gemäß diesem Ausführungsbeispiel ein Objekt 110 angeordnet, auf dessen äußerer Oberfläche ein Marker 112 angeordnet ist. Beispielsweise kann es sich bei dem Objekt 110 um ein beliebiges Bild oder einen Gegenstand, handeln. Das Objekt 110 liegt teilweise und der Marker 112 vollständig in dem Erfassungsbereich der Umfelderfassungseinrichtung 102. Insbesondere liegt zumindest ein Objektabschnitt 114 des Objekts 110 in dem Erfassungsbereich der Umfelderfassungseinrichtung 102. Somit umfasst das Abbild 108 ein Abbild 116 des Markers 112 und zumindest ein Abbild 118 des Objektabschnitts 114.

In der rechten Hälfte von Fig. 1 ist das mobile Gerät 100 zu einem im Vergleich zu der Darstellung auf der linken Hälfte zeitlich nachfolgenden Zeitpunkt gezeigt. Aufgrund einer zwischenzeitlichen Bewegung des mobilen Geräts 100 hat sich die reale Szenerie 106 aus Sicht der Umfelderfassungseinrichtung 102 leicht verändert, sodass von der Anzeigeeinrichtung 104 ein in Bezug zu dem Abbild 116 ein leicht verändertes weiteres Abbild 120 angezeigt wird. Beispielsweise kann das weitere Abbild 120 die reale Szenerie 106 im Vergleich zu dem Abbild 108 in einer anderen Perspektive oder einen anderen Ausschnitt der realen Szenerie 106 abbilden. Beispielhaft ist der andere Ausschnitt derart, dass das weitere Abbild 120 ein weiteres Abbild 122 des Objektabschnitts 114 jedoch kein weiteres Abbild des Markers 112 umfasst. Dennoch kann unter Verwendung des beschriebenen Verfahrens ein virtuelles Bild 124 dem weiteren Abbild 120 überlagert werden. Gemäß einem Ausführungsbeispiel soll das virtuelle Bild 124 dem weiteren Abbild 120 in einer vorbestimmten Position und/oder vorbestimmten Lage überlagert werden. Eine solche vorbestimmte Überlagerung ist gemäß einem Ausführungsbeispiel solange möglich, wie das weitere Abbild 120 ein geeignetes weiteres Abbild 122 des Objektabschnitts 106 umfasst, der als Ankerpunkt für das virtuelle Bild 124 verwendet werden kann.

Die Schritte des Verfahrens können ausschließlich unter Verwendung von Einrichtungen des mobilen Geräts 100 oder zusätzlich unter Verwendung zumindest einer externen Einrichtung, die hier beispielhaft als Cloud dargestellt ist, ausgeführt werden. Beispielsweise kann die externe Einrichtung 130 online mit dem mobilen Gerät 100 gekoppelt sein.

Das Verfahren kann fortlaufend ausgeführt werden oder mit einem Content-Aufruf oder einer von der Bedienperson angeforderten Betrachtung der realen Szenerie 106 unter Verwendung der Anzeigeeinrichtung 104 gestartet werden.

Das Abbild 108 basiert auf von der Umfelderfassungseinrichtung 102 oder einer der Umfelderfassungseinrichtung 102 nachgeschalteten Auswerteeinrichtung bereitgestellten Bilddaten. Beispielsweise unter Verwendung eines Objekterkennungsverfahrens oder eines anderen geeigneten Bildverarbeitungsverfahrens werden, hier schematisch dargestellt, Markerdaten 132 und Objektdaten 134 aus den Bilddaten bestimmt. Die Markerdaten 132 werden durch eine geeignete Extraktion aus den Bilddaten bestimmt und umfassen dem Marker 112 zugeordnete Identifikationsdaten 136, beispielsweise eine dem Marker 112 zugeordnete Identifikation ID und/oder eine dem Marker 112 zugeordnete Adresse oder einen Zeiger, beispielsweise in Form einer URL. Die Markerdaten 132 oder Teile der Markerdaten 132 oder daraus bestimmte Daten, wie beispielsweise die dem Marker zugeordnete Identifikation können verwendet werden, um unter Verwendung einer Zuordnungsvorschrift 138, beispielsweise einer Zuordnungstabelle, die gemäß diesem Ausführungsbeispiel in einer Speichereinrichtung der externen Einrichtung 130 gespeichert ist, dem Marker 112 zugeordnete virtuelle Bilddaten 140 aus einer Mehrzahl von virtuellen Bilddaten auszuwählen. Die Mehrzahl von virtuellen Bilddaten können in der Zuordnungstabelle 138 in Form von AR-Inhalten gespeichert sein. Die virtuellen Bilddaten 140 werden an das mobile Gerät 100 übertragen und zum Anzeigen des virtuellen Bildes 124 verwendet. Das Auswählen der virtuellen Bilddaten 140 wird gemäß einem Ausführungsbeispiel nur dann ausgeführt, wenn ein neuer Marker 112 gefunden wird, also beispielsweise das Abbild 116 des Markers 112 bzw. die Identifikationsdaten 136 des Markers 112 erstmalig aus den das Abbild 108 repräsentierenden Bilddaten extrahiert wurde.

Die Objektdaten 134 werden durch eine geeignete Extraktion geeignetere Bildmerkmale aus den Bilddaten bestimmt. Die geeigneten Bildmerkmale werden zur Erstellung einer Positionierungsvorschrift 142, auch neuer AR-Marker genannt, beispielsweise zur temporären und lokalen Nutzung verwendet. Die Positionierungsvorschrift 142 wird von dem mobilen Gerät 100, verwendet, um das virtuelle Bild 124 auch dann als Überlagerung des Abbilds 106 oder des weiteren Abbilds 120 darstellen zu können, wenn kein Abbild 116 des Markers 112 zur Verfügung steht. Für die Verwendung der Positionierungsvorschrift 142 ist kein Online-Abgleich nötig. Gemäß diesem Ausführungsbeispiel bezieht sich die Positionierungsvorschrift 142 auf den Objektabschnitt 114, der einen natürlichen Marker darstellt.

Gemäß einem Ausführungsbeispiel wird auf diese Weise eine sichere Zuordnung des AR-Inhalts anhand einer URL und eine stabile 3-D-Verfolgung anhand eines neuen, und deswegen aktuellen, natürlichen Markers ermöglicht.

Gemäß der Erfindung werden zumindest zwei natürliche Marker, also beispielsweise der Objektabschnitt 114 und ein weiterer Objektabschnitt 144 des Objekts 110 verwendet, um das virtuelle Bild 124 in dem weiteren Abbild 120 positionieren zu können. In diesem Fall bezieht sich die Positionierungsvorschrift 142 auf die beiden Objektabschnitte 114, 144 bzw. deren Abbilder 118, 122, 146. In dem weiteren Abbild 120 der realen Szenerie 106 wird in dem in Fig. 1 gezeigten Ausführungsbeispiel der weitere Objektabschnitt 144 nicht abgebildet. Dennoch kann das virtuelle Bild 124 mithilfe des weiteren Abbilds 122 des Objektabschnitts 114 positioniert werden.

Der beschriebene Ansatz basiert gemäß einem Ausführungsbeispiel auf einer Kombination zweier Verfahren, mit denen dreidimensionale Positionen von Objekten aus Kamera-Bildern extrahiert werden können.

Bei dem ersten dieser Verfahren werden dazu vordefinierte geometrische Formen als Marker 112 verwendet, die im Bereich des Kamerabilds platziert werden, z.B. QR-Codes. Anhand der bekannten Form eines solchen Markers 112 und dessen Abbild 116 im Kamerabild 108 kann per Bildverarbeitung dessen dreidimensionale Lage im Raum bestimmt werden. Vorteile des ersten Verfahrens sind, dass durch vordefinierte Gestaltungsregeln des Markers 112 dieser zweifelsfrei im Kamerabild 108 identifiziert werden kann und dass so zudem zusätzliche Informationen direkt im Erscheinungsbild des Markers 112 kodiert werden können, wie z.B. die ID eines Markers 112 oder ein Weblink per QR-Code. So kann durch ein einmalig definiertes Kodierungsschema, z.B. schwarz-weiß-bits des QR-Codes, eine sehr große Anzahl verschiedener Marker zweifelsfrei optisch voneinander unterschieden werden. Nachteil ist dagegen, dass diese Marker 112 durch die nötige genau definierte Form kaum robust gegenüber kleinen Störungen im Kamerabild 108 sind. Solche kleinen Störungen können z.B. eine leichte Fokus-Unschärfe, eine Bewegungsunschärfe oder einen steilen Betrachtungswinkel darstellen. Dies führt dazu, dass die dreidimensionale Lage eines dieser Marker 112 nur dann korrekt extrahiert werden kann, wenn er komplett fokussiert ist, parallel zur Bildebene und unverdeckt im Kamerabild 108 zu sehen ist und die Kamera 102 relativ zum Marker 112 nahezu ruht. Damit wird z.B. die kontinuierlich lagerichtige AR-Einblendung eines virtuellen 3D-Objekts 124 auf Basis eines Markers 112 in Form eines QR-Codes nahezu unmöglich. Bei entsprechend großer Gestaltung eines geometrischen Markers 112 wird dieses Problem leicht verbessert, allerdings einhergehend mit dem weiteren Nachteil, dass dieser dann sehr prominent und groß in der Szene 106 platziert werden muss, was für die meisten Anwendungen ungeeignet ist.

Bei dem zweiten dieser Verfahren, das auch als Natural Feature Tracking bzw. NFT bezeichnet werden kann, werden Abbilder von in der realen Umgebung 106 befindlichen Objekten 110, z.B. dem Cover-Bild eines Flyers, im Vorfeld als Marker definiert und deren natürliche optische Merkmale 114, z.B. markante Punkte, Kantenverläufe oder Farben, zunächst durch einen Algorithmus in geeigneter Form vom Original extrahiert, also sozusagen angelernt. Zur AR-Positionsbestimmung, also zur Bestimmung der Position eines zu überlagernden virtuellen Bildes 124, wird dann im Kamerabild 108 nach diesen zuvor angelernten natürlichen Merkmalen 114 gesucht und durch Optimierungsverfahren wird zum einen entschieden, ob sich das gesuchte Objekt 110 gerade im Kamerabild 108 befindet und zum anderen dessen Lage und Position anhand der Anordnung von dessen Einzelmerkmalen 114 geschätzt. Vorteil dabei ist, dass durch das optimierungsbasierte Verfahren große Robustheit gegenüber Störungen besteht. So können Positionen von Marker-Objekten 114 auch noch in unscharfen Kamerabildern 108, 120, bei teilweiser Verdeckung und sehr steilen Winkeln erkannt werden. Weitergehende Verfahren (z.B. SLAM) ermöglichen sogar, auf Basis einer initialen Erkennung eines Marker-Objekts 114 im Kamerabild 108, 120, dessen Modell fortwährend mit Merkmalen aus der aktuellen Umgebung zu erweitern, sodass dessen Lage im Raum teilweise auch dann noch richtig bestimmt werden kann, wenn es selbst gar nicht mehr im Kamerabild 120 zu sehen ist. Dieses Verfahren hat allerdings signifikante Nachteile, insbesondere wenn eine große Anzahl von verschiedenen Markern damit erkannt werden soll. So muss zunächst jedes Marker-Objekt 114 bezüglich des natürlichen optischen Erscheinungsbildes bestimmte optische Kriterien erfüllen, um überhaupt im Kamerabild 108, 120 erkennbar zu sein. Außerdem müssen sich zur eindeutigen Identifizierung alle erkennbaren Marker 114 in ihrem optischen Erscheinungsbild deutlich voneinander unterscheiden - je größer die Anzahl der erkennbaren Marker 114, desto höher die Wahrscheinlichkeit einer Fehl-Zuordnung. Dies ist insbesondere problematisch, wenn viele optisch ähnliche Objekte 100, z.B. Visitenkarten, innerhalb einer Datenbank unterschieden werden sollen. Weiterhin muss zum Zeitpunkt der Erkennung bereits eine Datenbank mit den natürlichen Merkmalen aller erkennbaren Marker existieren und diese komplette Datenbank mit dem Kamerabild 108, 120 abgeglichen werden, um herauszufinden, ob sich einer der Marker 114 im Kamerabild befindet. Bei einem System wie einer Smartphone AR-App mit einer ständig wachsenden Marker-Datenbank erfordert dies, die jeweils aktuelle Version der Datenbank an einer zentralen Stelle (online) vorzuhalten, während jedes Smartphone 100 zur Analyse jedes einzelnen Kamera-Bildes 108, 120 einen rechentechnisch aufwendigen Bild-Such-Auftrag an diese Datenbank schicken muss.

Der hier beschriebene Ansatz basiert gemäß einem Ausführungsbeispiel auf einer Kombination der beiden obigen Verfahren, bei der zur Erkennung und 3D-Positionsbestimmung von Marker-Objekten im Kamerabild 108, 120 beide Verfahren in nacheinander geschalteten, miteinander verknüpften, Stufen durchgeführt werden: In der ersten Stufe wird zur reinen Identifikation virtueller Bilddaten 140 eines virtuellen Bildes 124, hier als AR-Inhalt 124 bezeichnet, im Kamerabild 108 eine geometrische, vordefinierte Marker-Gestaltung, z.B. QR-Code oder ein Strichcode, als Marker 116 verwendet. Sobald einer dieser Marker 116 im Kamerabild 108 gefunden wurde, wird daraus zunächst die Identifikation 142, also beispielsweise die ID bzw. URL des AR-Inhalts 124 sowie dessen initiale Position und Lage in der realen Szene 106 extrahiert. Gleichzeitig wird beispielsweise genau in dem Moment der Erkennung des Markers 112, beispielsweise in Form eines Codes, die aktuelle Umgebung unmittelbar um den Marker 112 herum im Kamerabild 108 erfasst, natürliche Merkmale 114 daraus extrahiert und damit in Echtzeit ein neuer natürlicher Marker 118 entsprechend dem zweiten Verfahren erstellt. In allen folgenden Kamerabildern 120 und Bewegungen von Kamera 102 oder Marker 114 kann die dreidimensionale Positionsbestimmung des AR-Inhalts 124 nun anhand des neuen, robusten natürlichen Markers 114 erfolgen. So ist im Gegensatz zum ursprünglichen ersten Verfahren (vgl. QR-Code-Erkennung) auch eine durchgängig stabile Darstellung und Bewegung von dreidimensionalen virtuellen Objekten als virtuelle Bilder 124 möglich, bzw. im Gegensatz zu geometrischen Markern können diese auch noch verfolgt werden, wenn sie nur klein und dezent in der realen Szene 106 platziert werden. Weiterhin ist im Gegensatz zum ursprünglichen zweiten Verfahren (Erkennung natürlicher Marker) die optische Unterscheidungsfähigkeit des neu erstellten Markers 114 im Vergleich zu anderen Markern völlig unerheblich, da dessen Zuordnung zu einem AR-Inhalt 124 bereits durch den verknüpften Code, also dem Marker 112, festgelegte wurde. Durch das direkte Extrahieren einer URL aus dem verknüpften Code wird außerdem das stetige Durchsuchen einer Online-Merkmals-Datenbank vermieden und die Anzahl der unterscheidbaren Marker innerhalb einer Anwendung auf nahezu unendlich erhöht. Weiterhin sind durch die Erstellung des natürlichen AR-Markers 114 unmittelbar zum Zeitpunkt der Verwendung im Gegensatz zu bisherigen AR-Verfahren auch solche Objekte 100 als natürliche Marker 114 verwendbar, die ihr optisches Erscheinungsbild häufig ändern, z.B. Häuserfassaden zu verschiedenen Tageszeiten oder Jahreszeiten.

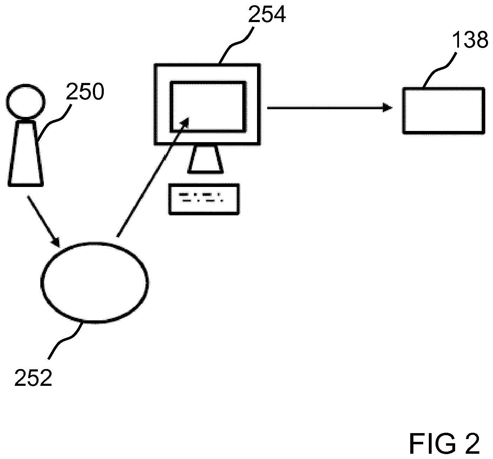

Fig. 2 zeigt eine Übersichtsdarstellung eines Verfahrens zum Erstellen einer Zuordnungsvorschrift 138 gemäß einem Ausführungsbeispiel. Die Zuordnungsvorschrift 138 kann beispielsweise in dem in Fig. 1 gezeigten externen Gerät abgelegt werden.

Eine Bedienperson 250 stellt 3D-AR-Inhalte 252 bereit, beispielsweise in Form einer Mehrzahl von virtuellen Bilddaten. Ein Web-Interface 254 wird verwendet, um basierend auf den 3D-AR-Inhalten 252 die Zuordnungsvorschrift 138 zu erstellen oder zu aktualisieren. Die Zuordnungsvorschrift 138 umfasst gemäß einem Ausführungsbeispiel für jeden 3D-AR-Content der 3D-AR-Inhalte eine Verknüpfung mit einer spezifischen, einzigartigen URL.

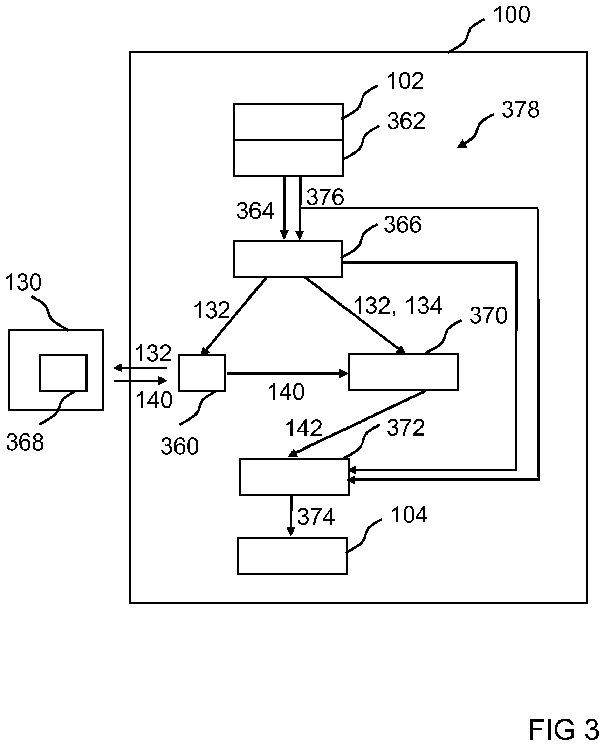

Fig. 3 zeigt eine schematische Darstellung eines mobilen Geräts 100 gemäß einem Ausführungsbeispiel. Bei dem mobilen Gerät 100 kann es sich beispielsweise um das in Fig. 1 gezeigte mobile Gerät handeln. Das mobile Gerät 100 weist eine Umfelderfassungseinrichtung 102 und eine Anzeigeeinrichtung 104 zum Anzeigen eines Abbilds einer von der Umfelderfassungseinrichtung 102 erfassten realen Szenerie auf. Dem Abbild kann ein virtuelles Bild überlagert werden. Gemäß diesem Ausführungsbeispiel umfasst das mobile Gerät 100 eine Schnittstelle 360, beispielsweise Schnittstelle zur drahtlosen Datenübertragung, zu einer externen Einrichtung 130. Gemäß einem Ausführungsbeispiel ist die Umfelderfassungseinrichtung 102 auf einer Rückseite und die Anzeigeeinrichtung 104 auf einer Vorderseite des mobilen Geräts 100 angeordnet.

Das mobile Gerät 100 weist eine mit der Umfelderfassungseinrichtung 102 gekoppelte Einleseeinrichtung 362 auf, die ausgebildet ist, um Bilddaten 364 der Umfelderfassungseinrichtung 102 als Rohdaten oder bereits aufbereitete Daten einzulesen. Beispielsweise handelt es sich bei der Einleseeinrichtung 362 um eine Schnittstelle zu der Umfelderfassungseinrichtung 102. Die Bilddaten 364 stellen ein von der Umfelderfassungseinrichtung 102 erfasstes Abbild der realen Szenerie dar. Die von der Einleseeinrichtung 362 eingelesenen Bilddaten 364 werden in einer Bestimmungseinrichtung 366 des mobilen Geräts 100 weiterverarbeitet. Insbesondere werden aus den Bilddaten 364 Markerdaten 132 und Objektdaten 134 bestimmt, beispielsweise extrahiert. Die Markerdaten 132 stellen ein Abbild und eine Positionierung eines in der realen Szenerie angeordneten Markers, beispielsweise des in Fig. 1 gezeigten geometrischen Markers 112, dar. Die Objektdaten 134 stellen ein Abbild und eine Positionierung eines Objektabschnitts eines im Umfeld des Markers in der realen Szenerie angeordneten Objekts dar. Beispielsweise kann es sich bei dem Objektabschnitt um den in Fig. 1 gezeigten Objektabschnitt 114 handeln, der als ein natürlicher Marker verwendet werden kann. Dazu ist die Bestimmungseinrichtung 366 ausgebildet, um zunächst das Abbild des Markers in dem Abbild der realen Szenerie zu erkennen und anschließend die dem Abbild des Markers zugeordneten Markerdaten aus den Bilddaten 364 zu bestimmen. Entsprechend ist die Bestimmungseinrichtung 366 ausgebildet, um zunächst ein oder mehrerer geeignete Abbilder von Objektabschnitten in dem Abbild der realen Szenerie zu erkennen und anschließend die, dem oder den Abbildern der geeigneten Objektabschnitte zugeordneten Objektdaten, aus den Bilddaten 364 zu bestimmen.

Gemäß diesem Ausführungsbeispiel werden die Markerdaten 132 an die externe Schnittstelle 360 bereitgestellt und über die externe Schnittstelle 360, beispielsweise eine Funkschnittstelle, an die externe Einrichtung 130, beispielsweise in Form eines externen Geräts, übertragen. Die externe Einrichtung 130 weist eine Auswahleinrichtung 368 auf, die ausgebildet ist, um unter Verwendung einer Zuordnungsvorschrift den Markerdaten 132 zugeordnete virtuelle Bilddaten 140 aus einer Mehrzahl virtueller Bilddaten auszuwählen und an die externe Schnittstelle 360 des mobilen Geräts 100 bereitzustellen. Alternativ können an die Einleseeinrichtung 360 und/oder die externe Einrichtung 130 nur Teile der Bilddaten 132 oder die Bilddaten 132 in einer weiterverarbeiteten Form bereitgestellt werden. Die externe Schnittstelle 360 ist ausgebildet, um die virtuellen Bilddaten 140 an eine Bestimmungseinrichtung 370 bereitzustellen. Die virtuellen Bilddaten 140 umfassen eine Darstellungsanweisung zum Darstellen eines virtuellen Bilds und eine Positionierungsanweisung zum Positionieren des virtuellen Bilds. Die Bestimmungseinrichtung 370 ist ferner ausgebildet, um die Markerdaten 132 und die Objektdaten 134 zu empfangen. Die Bestimmungseinrichtung 370 ist ausgebildet, um eine Positionierungsvorschrift 142 zum Positionieren des virtuellen Bilds in Bezug zu dem Abbild des Objektabschnitts unter Verwendung der Markerdaten 132, der Objektdaten 134 und der virtuellen Bilddaten 140 zu bestimmen.

Gemäß diesem Ausführungsbeispiel umfasst das mobile Gerät 100 eine Steuereinrichtung 372 zum Ansteuern der Anzeigeeinrichtung 104. Die Steuereinrichtung 372 ist ausgebildet, um überlagerte Bilddaten 376, beispielsweise in Form eines Steuersignals zum Steuern einer von der Anzeigeeinrichtung 104 dargestellten Anzeige an die Anzeigeeinrichtung 104 bereitzustellen. Die überlagerten Bilddaten 376 stellen dabei eine Überlagerung eines weiteren Abbilds der realen Szenerie mit dem virtuellen Bild dar. Die Steuereinrichtung 372 ist ausgebildet, um die überlagerten Bilddaten 376 unter Verwendung der von der Bestimmungseinrichtung 370 bereitgestellten Positionierungsvorschrift 142, weiterer Bilddaten 376 und weiterer Objektdaten 378 zu erzeugen. Die weiteren Bilddaten 376 stellen ein von der Umfelderfassungseinrichtung 102 erfasstes weiteres Abbild der realen Szenerie dar. Die weiteren Objektdaten 378 umfassen zumindest eine Positionierung des Objektabschnitts innerhalb des weiteren Abbilds der realen Szenerie.

Gemäß einem Ausführungsbeispiel umfasst die Positionierungsvorschrift 142 die von den virtuellen Bilddaten 140 umfasste Darstellungsanweisung zum Darstellen des virtuellen Bilds. Alternativ kann die Darstellungsanweisung separat zu der Positionierungsvorschrift 142 an die Steuereinrichtung 372 übermittelt werden.

Gemäß einem Ausführungsbeispiel ist die Auswahleinrichtung 368 Teil des mobilen Geräts 100. In diesem Fall ist die externe Einrichtung 130 nicht erforderlich und die externe Schnittstelle 360 kann als interne Schnittstelle ausgeführt sein.

Die in Fig. 1 gezeigten Einrichtungen 360, 362, 366, 370, 372 sind nur eine beispielhafte Anordnung von Einrichtungen einer Vorrichtung 378 zum Überlagern eines Abbilds einer realen Szenerie mit einem virtuellen Bild. Zur Umsetzung der Verfahrensschritte eines Verfahrens zum Überlagern eines Abbilds einer realen Szenerie mit einem virtuellen Bild können beispielsweise einige oder alle der Einrichtungen 360, 362, 366, 370, 372 zu größeren Einheiten zusammengefasst werden.

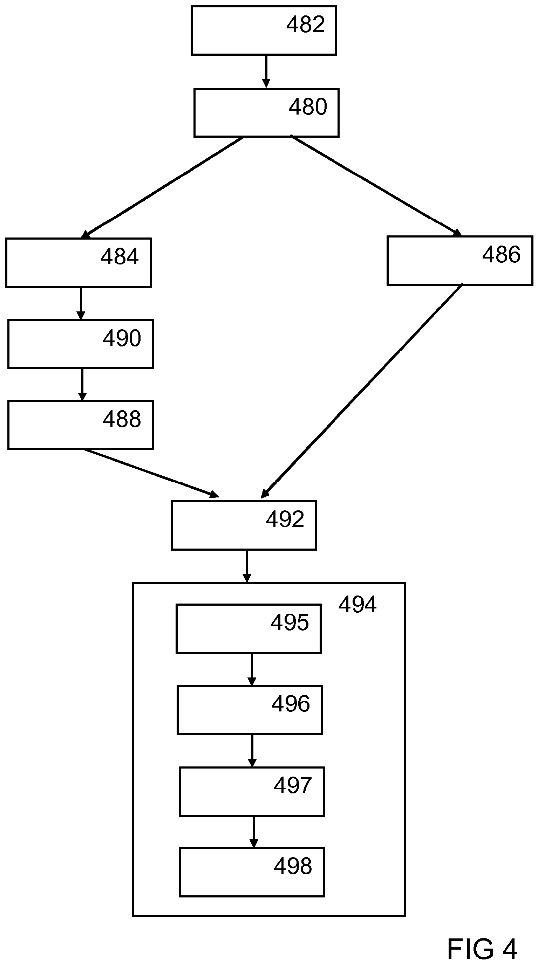

Fig. 4 zeigt ein Ablaufdiagramm eines Verfahrens zum Überlagern eines Abbilds einer realen Szenerie mit einem virtuellen Bild gemäß einem Ausführungsbeispiel, das nicht alle Merkmale der Erfindung beinhaltet. Das Verfahren kann unter Verwendung von Einrichtungen eines anhand der vorangegangenen Figuren beschriebenen mobilen Geräts ausgeführt werden.

In einem Schritt 480 werden Bilddaten eingelesen, die ein von einer Umfelderfassungseinrichtung des mobilen Geräts erfasstes Abbild einer realen Szenerie repräsentieren. Die Bilddaten können in einem optionalen vorangegangenen Schritt 482 von der Umfelderfassungseinrichtung erfasst worden sein. Aus den Bilddaten werden in einem Schritt 484 Markerdaten bestimmt, die ein Abbild und eine Positionierung eines in der realen Szenerie angeordneten Markers repräsentieren. Entsprechend werden aus den Bilddaten in einem Schritt 486 Objektdaten bestimmt, die ein Abbild und eine Positionierung eines Objektabschnitts eines im Umfeld des Markers in der realen Szenerie angeordneten Objekts repräsentieren. In einem Schritt 488 werden virtuelle Bilddaten eingelesen, die aus einer Mehrzahl virtueller Bilddaten unter Verwendung der Markerdaten ausgewählte Bilddaten repräsentieren und eine Darstellungsanweisung zum Darstellen des virtuellen Bilds und eine Positionierungsanweisung zum Positionieren des virtuellen Bilds umfassen. In einem optionalen Schritt 490, der auf dem mobilen Gerät oder einer externen Einrichtung ausgeführt werden kann, werden die virtuellen Bilddaten unter Verwendung der Markerdaten ausgewählt. Unter Verwendung der Markerdaten, der Objektdaten und der virtuellen Bilddaten wird in einem Schritt 492 eine Positionierungsvorschrift ermittelt, die geeignet ist, um das virtuelle Bild in Bezug zu dem Abbild des Objektabschnitts darzustellen, beispielsweise als Überlagerung eines weiteren Abbilds der realen Szenerie.

In einem optionalen Schritt 494 wird die Positionierungsvorschrift verwendet, um die Überlagerung des weiteren Abbilds der realen Szenerie mit dem virtuellen Bild darzustellen, beispielsweise auf einer Anzeigeeinrichtung des mobilen Geräts.

Der Schritt 494 kann beispielsweise einen Schritt 496 des Einlesens von weiteren Bilddaten umfassen, die das weitere Abbild der realen Szenerie repräsentieren, einen Schritt 498 des Bestimmens einer Positionierung eines weiteren Abbilds des Objektabschnitts aus den weiteren Bilddaten umfassen und einen Schritt des Erstellens 499 überlagerter Bilddaten unter Verwendung der weiteren Bilddaten, des weiteren Abbilds des Objektabschnitts und der Positionierungsvorschrift umfassen, wobei die überlagerten Bilddaten eine Überlagerung des weiteren Abbilds der realen Szenerie mit dem virtuellen Bild repräsentieren. In dem Schritt des Bestimmens der Positionierung kann die Positionierung des weiteren Abbilds des Objektabschnitts innerhalb des weiteren Abbilds der realen Szenerie bestimmt werden. Somit können Abbilder des Objektabschnitts in zeitlich aufeinanderfolgenden Abbildern der realen Szenerie als Ankerpunkte für das virtuelle Bild eingesetzt werden. Im Schritt des Erstellens überlagerter Bilddaten kann das virtuelle Bild unter Verwendung der Darstellungsanweisung dargestellt werden.

Der Schritt 494 kann fortlaufend wiederholt werden, wobei die Positionierungsvorschrift jeweils verwendet wird, um fortlaufend weitere Abbilder der realen Szenerie mit dem virtuellen Bild zu überlagern. Die vorangegangenen Schritte brauchen dabei nicht wiederholt ausgeführt werden, da es ausreichend ist, die Positionierungsvorschrift einmal zu bestimmen.

Gemäß der Erfindung werden im Schritt 486 aus den Bilddaten Objektdaten bestimmt, die Abbilder und Positionierungen mehrerer Objektabschnitte, beispielsweise zwei, drei, vier oder mehr Objektabschnitte, eines oder mehrerer im Umfeld des Markers in der realen Szenerie angeordneten Objekte repräsentieren. Auf diese Weise kann die Zahl der Ankerpunkte zum Verankern des virtuellen Bildes in dem weiteren Abbild oder den weiteren Abbildern der realen Szenerie erhöht werden. Für diesen Fall kann im Schritt 492 die Positionierungsvorschrift so ermittelt werden, dass sie geeignet ist, das virtuelle Bild in den weiteren Abbildern der realen Szenerie in Bezug zu den Abbildern der Objektabschnitte darzustellen. Um diese Darstellung umzusetzen, werden im Schritt 498 des Bestimmens die Positionierungen der einzelnen Abbilder der Objektabschnitte aus den weiteren Bilddaten bestimmt. Vorteilhaft kann in diesem Fall das virtuelle Bild auch dann noch entsprechend der in den virtuellen Bilddaten hinterlegten Vorgabe positioniert werden, wenn nicht alle Abbilder der Objektabschnitte von den weiteren Bilddaten umfasst sind.

Gemäß der Erfindung wird die Positionierungsvorschrift im Schritt 492 unter Verwendung eines Messwertes eines Messgerätes, insbesondere eines Beschleunigungssensors, eines Rotationssensors, eines Magnetometers oder eines GPS-Empfängers, des mobilen Geräts ermittelt.

## Patentansprüche

1. Verfahren zum Überlagern eines Abbilds einer realen Szenerie mit einem virtuellen Bild, wobei das Verfahren die folgenden Schritte umfasst:
Einlesen (480) von Bilddaten (364), wobei die Bilddaten (364) ein von einer Umfelderfassungseinrichtung (102) eines mobilen Geräts (100) erfasstes Abbild (108) der realen Szenerie (106) repräsentieren;
Bestimmen (484) von Markerdaten (132) aus den Bilddaten (364), wobei die Markerdaten (132) ein Abbild (116) und eine Positionierung eines in der realen Szenerie (106) angeordneten Markers (112) repräsentieren;
Einlesen (488) von virtuellen Bilddaten (140), wobei die virtuellen Bilddaten (140) aus einer Mehrzahl (252) virtueller Bilddaten unter Verwendung der Markerdaten (132) ausgewählte Bilddaten repräsentieren, wobei die virtuellen Bilddaten (140) eine Darstellungsanweisung zum Darstellen des virtuellen Bilds (124) und eine Positionierungsanweisung zum Positionieren des virtuellen Bilds (124) umfassen;
Bestimmen (486) von Objektdaten (134) aus den Bilddaten (364), wobei die Objektdaten (134) ein Abbild (118) und eine Positionierung eines Objektabschnitts (114) eines im Umfeld des Markers (112) in der realen Szenerie (106) angeordneten Objekts (110) repräsentieren, wobei das Abbild (118) des Objektabschnitts (114) als ein Ankerpunkt für das virtuelle Bild (124) verwendbar ist, und wobei die Objektdaten (134) ein zweites Abbild (146) und eine zweite Positionierung eines zweiten Objektabschnitts (144) eines weiteren im Umfeld des Markers (112) in der realen Szenerie (106) angeordneten Objekts repräsentieren, wobei das zweite Abbild (146) des zweiten Objektabschnitts (144) als ein zweiter Ankerpunkt für das virtuelle Bild (124) verwendbar ist;
Ermitteln (492) einer sich auf den Objektabschnitt (114) und den zweiten Objektabschnitt (144) beziehenden Positionierungsvorschrift (142) zum Positionieren des virtuellen Bilds (124) in Bezug zu dem Abbild (118) des Objektabschnitts (114) und dem zweiten Abbild (146) des zweiten Objektabschnitts (144) unter Verwendung der Objektdaten (134) und der virtuellen Bilddaten (140); und
Verwenden (494) der Positionierungsvorschrift (142), um eine Überlagerung eines weiteren Abbilds (120) der realen Szenerie (106) mit dem virtuellen Bild darzustellen, wobei der Schritt des Verwendens (494) ein
- Einlesen (496) von weiteren Bilddaten (376) umfasst, wobei die weiteren Bilddaten (376) ein von der Umfelderfassungseinrichtung (102) des mobilen Geräts (100) erfasstes weiteres Abbild (120) der realen Szenerie (106) repräsentieren, wobei die weiteren Bilddaten (376) kein Abbild (116) des Markers (112) umfassen;
- Bestimmen (498) einer Positionierung eines weiteren Abbilds (122) des Objektabschnitts (114) und/oder einer Positionierung eines weiteren zweiten Abbilds des zweiten Objektabschnitts (144) aus den weiteren Bilddaten (376) umfasst; und
- Erstellen (499) überlagerter Bilddaten (374) unter Verwendung der weiteren Bilddaten (376), der Positionierung des weiteren Abbilds (122) des Objektabschnitts (114) und/oder der Positionierung des weiteren zweiten Abbilds des zweiten Objektabschnitts (144) und der Positionierungsvorschrift (142) umfasst, wobei das weitere Abbild (122) des Objektabschnitts (114) als Ankerpunkt und/oder das weitere zweite Abbild (146) des zweiten Objektabschnitts (144) als zweiter Ankerpunkt für das virtuelle Bild (124) verwendet wird, und wobei die überlagerten Bilddaten (374) eine Überlagerung des weiteren Abbilds (120) der realen Szenerie (106) mit dem virtuellen Bild (124) repräsentieren;
wobei eine kontinuierliche Iteration des Schrittes des Verwendens (494) mehrmals pro Sekunde durchgeführt wird, wobei die Positionierungsvorschrift (142) jeweils verwendet wird, um während einer Veränderung der relativen Position zwischen dem mobilen Gerät (100) und dem Marker (112) nach einer Erst-Erfassung des Markers (112) fortlaufend weitere Abbilder (122) der realen Szenerie (106) mit dem virtuellen Bild (124) zu überlagern, wobei die Veränderung der relativen Position zu einer Entfernung zwischen dem mobilen Gerät (100) und dem Marker (112) von bis zu dem Fünftausendfachen der Seitenlänge des Markers führt, bei der das mobile Gerät (100) den Marker (112) nicht erkennt, wobei zumindest ein in dem mobilen Gerät (100) befindliches Messgerät, zusätzlich zu der Bilderfassung, zur Messung der Veränderung der relativen Position genutzt wird.

2. Verfahren gemäß Anspruch 1, bei dem die Bilddaten (364) reale Bilddaten, die Objektdaten (134) reale Objektdaten und der Objektabschnitt (114) einen realen Objektabschnitt repräsentieren.

3. Verfahren gemäß einem der vorangegangenen Ansprüche, bei dem im Schritt (492) des Ermittelns die Positionierungsvorschrift (142) unter Verwendung der Markerdaten (132) oder zumindest eines Teils der Markerdaten (132) ermittelt wird.

4. Verfahren gemäß einem der vorangegangenen Ansprüche, bei dem im Schritt (492) des Ermittelns die Positionierungsvorschrift (142) unter Verwendung eines Messwertes des Messgerätes, insbesondere eines Beschleunigungssensors, eines Rotationssensors, eines Magnetometers oder eines GPS-Empfängers, des mobilen Geräts ermittelt wird.

5. Verfahren gemäß einem der vorangegangenen Ansprüche, mit einem Schritt des Bereitstellens zumindest eines Teils der Markerdaten (132) an eine Schnittstelle (360) zu einer externen Einrichtung (130), wobei im Schritt des Einlesens (488) von virtuellen Bilddaten (140) die virtuellen Bilddaten (140) über die Schnittstelle (360) zu der externen Einrichtung (130) eingelesen werden.

6. Verfahren gemäß einem der vorangegangenen Ansprüche, mit einem Schritt des Auswählens (490) der virtuellen Bilddaten (140) aus der Mehrzahl (252) virtueller Bilddaten unter Verwendung der Markerdaten (132).

7. Verfahren gemäß einem der vorangegangenen Ansprüche, bei dem der Marker (112) einen maschinenlesbaren Code repräsentiert, der eine Identifikation (138) des Markers (112) umfasst, wobei im Schritt des Bestimmens (484) von Markerdaten (132) die Identifikation (138) des Markers (112) als Teil der Markerdaten (132) bestimmt wird.

8. Verfahren gemäß einem der vorangegangenen Ansprüche, mit einem Schritt des Anzeigens (498) einer Überlagerung des weiteren Abbilds (120) der realen Szenerie (106) mit dem virtuellen Bild (124) unter Verwendung einer Anzeigeeinrichtung (104) des mobilen Geräts (100).

9. Verfahren gemäß einem der vorangegangenen Ansprüche, mit einem Schritt des Erfassens (482) der Bilddaten (364) unter Verwendung der Umfelderfassungseinrichtung (102) des mobilen Geräts (100).

10. Vorrichtung (378) zum Überlagern eines Abbilds einer realen Szenerie (106) mit einem virtuellen Bild, wobei die Vorrichtung (378) Einrichtungen zum Umsetzen der Schritte des Verfahrens gemäß einem der vorangegangenen Ansprüche aufweist.

11. Mobiles Gerät (100), insbesondere Smartphone, mit einer Vorrichtung (378) gemäß Anspruch 10.

12. Computer-Programmprodukt mit Programmcode zur Durchführung des Verfahrens nach einem der Ansprüche 1 bis 9, wenn das Computer-Programmprodukt auf einer Vorrichtung ausgeführt wird.

## Claims

1. Method of overlaying a picture of a real scene with a virtual image, the method comprising the following steps:
reading (480) image data (364), wherein the image data (364) represent a picture (108) of the real scene (106) captured by an environment sensor (102) of a mobile device (100);
determining (484) marker data (132) from the image data (364), wherein the marker data (132) represent a picture (116) and a positioning of a marker (112) arranged in the real scene (106);
reading (488) virtual image data (140), wherein the virtual image data (140) represent image data selected from a plurality (252) of virtual image data using the marker data (132), wherein the virtual image data (140) comprise a representation instruction for representing the virtual image (124) and a positioning instruction for positioning the virtual image (124);
determining (486) object data (134) from the image data (364), wherein the object data (134) represent a picture (118) and a positioning of object portion (114) of an object (110) arranged in the environment of the marker (112) in the real scene (106), wherein the picture (118) of the object portion (114) may be used as an anchor point for the virtual object (124),and wherein the object data (134) represent a second picture (146) and a second positioning of a second object portion (144) of a further object arranged in the environment of the marker (112) in the real scene (106), wherein the second picture (146) of the second object portion (144) may be used as a second anchor point for the virtual object (124);
ascertaining (492) a positioning rule (142) referring to the object portion (114) and the second object portion (144) for representing the virtual image (124) with reference to the picture (118) of the object portion (114) and the second picture (146) of the second object portion (144) using the object data (134) and the virtual image data (140); and
using (494) the positioning rule (142) in order to overlay a further picture (120) of the real scene (106) with the virtual image (106), the step of using (494) comprises
- reading (496) further image data (376), wherein the further image data (376) represent a further image (120) of the real scene (106) captured by the environment sensor of the mobile device (102), wherein the further image data (376) do not comprise an image (116) of the marker (112);
- determining (498) a positioning of a further picture (122) of the object portion (114) and/or a positioning of a further second picture of the second object portion (144) from the further image data (376); and
- creating (499) overlaid image data (374) using the further image data (376), the positioning of the further picture (122) of the object portion (114) and/or the positioning of the further second picture of the second object portion (144) and the positioning rule (142), wherein the further picture (122) of the object portion (114) is used as an anchor point and/or the further second picture (146) of the second object portion (144) is used as a second anchor point for the virtual object (124), and wherein the overlaid image data (374) represent an overlay of the further picture (120) of the real scene (106) with the virtual image (124),
wherein continuous iteration of the steps of using (494) is performed several times per second, wherein the positioning rule (142) is used, during a change in the relative position between the mobile device (100) and the marker (112) after a one-time detection of the marker (112), to continuously overlay further pictures (122) of the real scene with the virtual image (124), wherein the change in the relative position leads to a distance between the mobile device (100) and the marker (112) of up to five thousand times the side length of the marker, at which the mobile device (100) does not recognize the marker (112), wherein at least one measuring device arranged in the mobile device (100) is used, in addition to the image capture, for measuring the change in the relative position.

2. Method according to claim 1, wherein the image data (364) represent real image data, the object data (134) represent real object data, and the object portion (114) represents a real object portion.

3. Method according to one of the preceding claims, wherein in the step (492) of ascertaining the positioning rule (142) is ascertained using the marker data (132) or at least part of the marker data (132).

4. Method according to one of the preceding claims, wherein in the step (492) of ascertaining the positioning rule (142) is ascertained using a measured value of the measuring device, in particular an acceleration sensor, a rotation sensor, a magnetometer or a GPS receiver, of the mobile device.

5. Method according to one of the preceding claims, comprising a step of providing at least part of the marker data (132) to an interface (360) to an external device (130), wherein in the step of reading (488) virtual image data (140) the virtual image data (140) are read via the interface (360) to the external device (130).

6. Method according to one of the preceding claims, comprising a step of selecting (490) the virtual image data (140) from the plurality (252) of virtual image data using the marker data (132).

7. Method according to one of the preceding claims, wherein the marker (112) represents machine-readable code comprising an identification (138) of the marker (112), wherein the step of determining (484) marker data (132) the identification (138) of the marker (112) is determined as part of the marker data (132).

8. Method according to one of the preceding claims, comprising a step of displaying (498) an overlay of the further picture (120) of the real scene (106 with the virtual image (124) using a display device (104) of the mobile device (100).

9. Method according to one of the preceding claims, comprising a step of capturing (482) the image data (364) using the environment sensor (102) of the mobile device (100).

10. Apparatus (378) for overlaying a picture of a real scene (106) with a virtual image, wherein the apparatus (378) comprises devices for implementing the steps of the method according to one of the preceding claims.

11. Mobile device (100), in particular smartphone, comprising an apparatus (378) according to claim 10.

12. Computer program product with program code for performing the method according to one of the claims 1 to 9, when the computer program product is executed on an apparatus.

## Revendications

1. Procédé de superposition d'une image d'une scène réelle avec une image virtuelle, le procédé comprenant les étapes suivantes :
lire (480) des données d'image (364), dans lequel les données d'image (364) représentent une image (108) de la scène réelle (106) capturée par un capteur d'environnement (102) d'un dispositif mobile (100) ;
déterminer (484) des données de marqueur (132) à partir des données d'image (364), dans lequel les données de marqueur (132) représentent une image (116) et un positionnement d'un marqueur (112) disposé dans la scène réelle (106) ;
lire (488) des données d'image virtuelle (140), dans lequel les données d'image virtuelle (140) représentent des données d'image sélectionnées parmi une pluralité (252) de données d'image virtuelle en utilisant les données de marqueur (132), dans lequel les données d'image virtuelle (140) comprennent une instruction de représentation pour représenter l'image virtuelle (124) et une instruction de positionnement pour positionner l'image virtuelle (124) ;
déterminer (486) des données d'objet (134) à partir des données d'image (364), dans lequel les données d'objet (134) représentent une image (118) et un positionnement d'une partie d'objet (114) d'un objet (110) disposé dans l'environnement du marqueur (112) dans la scène réelle (106), dans lequel l'image (118) de la partie d'objet (114) étant utilisable comme point d'ancrage pour l'image virtuelle (124), et dans lequel les données d'objet (134) représentent une deuxième image (146) et un deuxième positionnement d'une deuxième partie d'objet (144) d'un autre objet disposé dans l'environnement du marqueur (112) dans la scène réelle (106), dans lequel la deuxième image (146) de la deuxième partie d'objet (144) peut être utilisée comme un deuxième point d'ancrage pour l'image virtuelle (124) ;
déterminer (492) une règle de positionnement (142) se référant à la partie d'objet (114) et à la seconde partie d'objet (144) pour représenter l'image virtuelle (124) en référence à l'image (118) de la partie d'objet (114) et à la seconde image (146) de la seconde partie d'objet (144) en utilisant les données d'objet (134) et les données d'image virtuelle (140) ; et
l'utilisation (494) de la règle de positionnement (142) afin de superposer une autre image (120) de la scène réelle (106) avec l'image virtuelle (106), l'étape d'utilisation (494) comprenant les étapes suivantes
- lire (496) d'autres données d'image (376), dans lequel les autres données d'image (376) représentent une autre image (120) de la scène réelle (106) capturée par le capteur d'environnement du dispositif mobile (102), dans lequel les autres données d'image (376) ne comprennent pas une image (116) du marqueur (112) ;
- déterminer (498) un positionnement d'une autre image (122) de la partie d'objet (114) et/ou un positionnement d'une autre seconde image de la seconde partie d'objet (144) à partir des autres données d'image (376) ; et
- créer (499) des données d'image superposées (374) en utilisant les données d'image supplémentaires (376), le positionnement de l'image supplémentaire (122) de la partie d'objet (114) et/ou le positionnement de la seconde image supplémentaire de la seconde partie d'objet (144) et la règle de positionnement (142), dans lequel l'autre image (122) de la partie d'objet (114) est utilisée comme point d'ancrage et/ou l'autre seconde image (146) de la seconde partie d'objet (144) est utilisée comme second point d'ancrage pour l'image virtuelle (124), et dans lequel les données d'image superposées (374) représentent une superposition de l'autre image (120) de la scène réelle (106) avec l'image virtuelle (124),
dans lequel l'itération continue de l'étape d'utilisation (494) est effectuée plusieurs fois par seconde, dans lequel la règle de positionnement (142) est utilisée, pendant un changement de la position relative entre le dispositif mobile (100) et le marqueur (112) après une première détection du marqueur (112), pour superposer continuellement d'autres images (122) de la scène réelle avec l'image virtuelle (124), dans lequel la variation de la position relative conduit à une distance entre le dispositif mobile (100) et le marqueur (112) allant jusqu'à cinq mille fois la longueur latérale du marqueur, à laquelle le dispositif mobile (100) ne reconnaît pas le marqueur (112), dans lequel au moins un dispositif de mesure situé dans le dispositif mobile (100) est utilisé, en plus de la capture d'image, pour mesurer la variation de la position relative.

2. Procédé selon la revendication 1, dans lequel les données d'image (364) représentent des données d'image réelles, les données d'objet (134) représentent des données d'objet réelles, et la partie d'objet (114) représente une partie d'objet réelle.

3. Procédé selon l'une des revendications précédentes, dans lequel, lors de l'étape (492) de détermination, la règle de positionnement (142) est déterminée en utilisant les données de marqueur (132) ou d'au moins une partie des données de marqueur (132).

4. Procédé selon l'une des revendications précédentes, dans lequel, dans l'étape (492) de détermination de la règle de positionnement (142), on détermine une valeur de mesure du dispositif de mesure, en particulier un capteur d'accélération, un capteur de rotation, un magnétomètre ou un récepteur GPS, du dispositif mobile.

5. Procédé selon l'une des revendications précédentes, comprenant une étape consistant à fournir au moins une partie des données de marqueur (132) à une interface (360) vers un dispositif externe (130), dans lequel, lors de l'étape de lecture (488) des données d'image virtuelle (140), les données d'image virtuelle (140) sont lues via l'interface (360) vers le dispositif externe (130).

6. Procédé selon l'une des revendications précédentes, comprenant une étape de sélection (490) des données d'image virtuelle (140) parmi la pluralité (252) de données d'image virtuelle en utilisant les données de marqueur (132).

7. Procédé selon l'une des revendications précédentes, dans lequel le marqueur (112) représente un code lisible par une machine comprenant une identification (138) du marqueur (112), dans lequel l'étape de détermination (484) des données de marqueur (132) l'identification (138) du marqueur (112) est déterminée comme faisant partie des données de marqueur (132).

8. Procédé selon l'une des revendications précédentes, comprenant une étape d'affichage (498) d'une superposition de l'autre image (120) de la scène réelle (106) avec l'image virtuelle (124) en utilisant un dispositif d'affichage (104) du dispositif mobile (100).

9. Procédé selon l'une des revendications précédentes, comprenant une étape de capture (482) des données d'image (364) à l'aide du capteur d'environnement (102) du dispositif mobile (100).

10. Dispositif (378) de superposition d'une image d'une scène réelle (106) avec une image virtuelle, dans lequel le dispositif (378) comprend des moyens de mise en oeuvre des étapes du procédé selon l'une des revendications précédentes.

11. Dispositif mobile (100), notamment smartphone, comprenant un dispositif (378) selon la revendication 10.

12. Produit programme d'ordinateur comprenant un code de programme pour réaliser le procédé selon l'une des revendications 1 à 9, lorsque le produit programme d'ordinateur est exécuté sur un dispositif.
